# EUROPEAN PATENT APPLICATION

(11) **EP 4 497 525 A1**
(43) Date of publication of application: **29.01.2025**
(21) Application number: 24177325.8
(22) Date of filing: 22.05.2024
(51) Int. Cl.: B23K 9/095

(54) **SYSTEMS TO DETERMINE VALUES FOR PARAMETERS OF A WELDING-TYPE OPERATION BASED ON TRAVEL SPEED**

(30) Priority: 31.05.2023 US 202363505185 P; 15.05.2024 US 202418664608
(71) Applicant: Illinois Tool Works Inc., Glenview IL 60025 (US)
(72) Inventor: RODRIGUEZ, Robert, Glenview, 60025 (US); BECKER, William Joshua, Glenview, 60025 (US)
(74) Representative: HGF

(57) **Abstract**

Disclosed example operator interfaces for welding-type operations include: one or more first inputs configured to receive a travel speed; one or more second inputs configured to receive a first characteristic of a welding-type operation; and control circuitry configured to: determine values for a plurality of welding-type parameters based on the travel speed and the first characteristic; and configure a welding-type power supply using the determined values for the plurality of welding-type parameters.

## Description

### RELATED APPLICATIONS

The present application claims the benefit of U.S. Provisional Patent Application Serial No. 63/505,185, filed May 31, 2023, entitled "SYSTEMS AND METHODS TO DETERMINE VALUES FOR PARAMETERS OF A WELDING-TYPE OPERATION BASED ON TRAVEL SPEED." The entirety of U.S. Provisional Patent Application Serial No. 63/505,185 is expressly incorporated herein by reference.

### FIELD OF THE DISCLOSURE

This disclosure relates generally to welding and, more particularly, to systems and methods to determine values for parameters of a welding-type operation based on travel speed.

### BACKGROUND

New and/or inexperienced welders commonly struggle with poor weld quality, due to a lack of understanding on proper welding technique. A common issue is that welders burn through thinner materials due to moving the welding tool with too slow of a travel speed. Additionally, welders may have inconsistent travel speeds, which can reduce the overall quality of the weld.

### SUMMARY

Systems and methods to determine values for parameters of a welding-type operation based on travel speed are disclosed, substantially as illustrated by and described in connection with at least one of the figures, as set forth more completely in the claims.

### BRIEF DESCRIPTION OF THE DRAWINGS

FIG. 1 is a block diagram of an example welding-type system including a remote wire feeder and configured to provide welding-type output power, in accordance with aspects of this disclosure.
FIG. 2 is a block diagram of another example welding system configured to provide welding-type output power with a welding-type power supply having an integrated wire feeder, in accordance with aspects of this disclosure.
FIG. 3 illustrates an example interface that may implement the interfaces and/or devices of FIGS. 1 and/or 2 to determine weld parameters based on a set travel speed.
FIG. 4 illustrates the example interface of FIG. 3 having updated values for weld parameters based on a change in the travel speed input.
FIG. 5 illustrates the example interface of FIG. 3 including a travel speed measurement interface.
FIG. 6 is a flowchart representative of example machine readable instructions which may be executed by the example welding-type power supplies and/or external computing devices of FIGS. 1 and/or 2 to determine weld parameters based on a set travel speed.
FIG. 7 is a block diagram of an example computing system that may be used to implement the external computing device of FIGS. 1 and/or 2.

The figures are not necessarily to scale. Where appropriate, similar or identical reference numbers are used to refer to similar or identical components.

### DETAILED DESCRIPTION

Prior techniques to improve welder technique with regard to travel speed involve tracking travel speed and providing feedback to the operator. Some techniques are disclosed in U.S. Patent No. 11,014,183, U.S. Patent No. 9,522,437, U.S. Patent No. 9,573,215, and U.S. Patent No. 9.511,443. The entireties of U.S. Patent No. 11,014,183, U.S. Patent No. 9,522,437, U.S. Patent No. 9,573,215, and U.S. Patent No. 9.511,443 are incorporated herein by reference.

Instead of, or in addition to, training an operator to perform welding-type operations at a designated speed, disclosed example systems and methods uses an operator-selected travel speed to configure other parameters of the welding-type operation. By using an operator-selected (e.g., operator-preferred) travel speed and selecting corresponding parameter values, disclosed systems and methods allow for more consistent operator performance by accommodating operator preferences and/or an operator's learned speeds.

Some example systems and methods measure the operator's travel speed during a simulated operation by measuring the time involved in performing the simulated operation of a specified length. In this way, the system can assist the operator in more quickly determining the operator's preferred travel speed and providing appropriate welding-type parameter values to perform the welding-type operation. In some examples, the system may enforce a range of acceptable or preferred travel speeds to avoid accommodating travel speeds that will not result in a welding-type operation result of an acceptable or preferred quality.

As used herein, the term "welding-type power" refers to power suitable for welding, plasma cutting, induction heating, CAC-A and/or hot wire welding/preheating (including laser welding and laser cladding). As used herein, the term "welding-type power supply" refers to any device capable of, when power is applied thereto, supplying welding, plasma cutting, induction heating, CAC-A and/or hot wire welding/preheating (including laser welding and laser cladding) power, including but not limited to inverters, converters, resonant power supplies, quasi-resonant power supplies, and the like, as well as control circuitry and other ancillary circuitry associated therewith.

As used herein, a "welding-type power supply" refers to any device capable of, when power is applied thereto, supplying welding, cladding, plasma cutting, induction heating, laser (including laser welding, laser hybrid, and laser cladding), carbon arc cutting or gouging and/or resistive preheating, including but not limited to transformer-rectifiers, inverters, converters, resonant power supplies, quasi-resonant power supplies, switch-mode power supplies, etc., as well as control circuitry and other ancillary circuitry associated therewith.

As used herein, a "weld voltage setpoint" refers to a voltage input to the power converter via a user interface, network communication, weld procedure specification, or other selection method.

As used herein, a "circuit" includes any analog and/or digital components, power and/or control elements, such as a microprocessor, digital signal processor (DSP), software, and the like, discrete and/or integrated components, or portions and/or combinations thereof.

As used herein, the term "remote wire feeder" refers to a wire feeder that is not integrated with the power supply in a single housing.

Disclosed examples operator interfaces for welding-type operations include: one or more first inputs configured to receive a travel speed; one or more second inputs configured to receive a first characteristic of a welding-type operation; and control circuitry configured to: determine values for a plurality of welding-type parameters based on the travel speed and the first characteristic; and configure a welding-type power supply using the determined values for the plurality of welding-type parameters.

In some example operator interfaces, the first characteristic includes at least one of a material thickness of a workpiece of the welding-type operation, a shielding gas type, a wire size, or a wire type. In some example operator interfaces, the operator interface is configured to receive a plurality of characteristics including the first characteristic.

In some example operator interfaces, the plurality of welding-type parameters include at least one of a welding-type process type, an output voltage, a wire feed speed, an output current, a pulse parameter, an AC parameter, or an inductance parameter. In some example operator interfaces, the one or more first inputs are configured to receive the travel speed as a length of the welding-type operation and a duration of the welding-type operation, in which the control circuitry is configured to determine the travel speed based on the length and the duration.

In some example operator interfaces, the one or more first inputs are configured to receive the travel speed as a length of the welding-type operation, in which the control circuitry is configured to measure a duration of a simulation of the welding-type operation and determine the travel speed based on the length and the measured duration. In some example operator interfaces, the one or more first inputs are configured to receive the travel speed as a measured duration of a simulated welding-type operation over a predetermined length, in which the control circuitry configured to determine the travel speed based on the predetermined length and the measured duration.

In some example operator interfaces, the control circuitry is configured to determine the plurality of welding-type parameters using a lookup table. In some example operator interfaces, the lookup table specifies values for the plurality of welding-type parameters at a plurality of different travel speeds. In some example operator interfaces, the control circuitry is configured to, in response to determining that the travel speed is outside of a range based on at least the first characteristic, output at least one of an indication to change the travel speed or an indication that the travel speed is not permitted.

Some example operator interfaces further include one or more third inputs configured to receive operator modifications to one or more of the determined values of the plurality of welding-type parameters. In some example operator interfaces, the control circuitry is configured to, in response to the operator modifications, change one or more values of other ones of the welding-type parameters. In some example operator interfaces, the control circuitry is configured to determine the values for a plurality of welding-type parameters based on a target weld size.

Some disclosed example welding-type power supplies include: power conversion circuitry configured to convert input power to welding-type power; an operator interface including: one or more first inputs configured to receive a travel speed; and one or more second inputs configured to receive a first characteristic of a welding-type operation; and control circuitry configured to: determine values for a plurality of weld parameters based on the travel speed and the first characteristic; and control the power conversion circuitry based on the determined values for the plurality of weld parameters.

In some example welding-type power supplies, the first characteristic includes at least one of a material thickness of a workpiece of the welding-type operation, a shielding gas type, a wire size, or a wire type. In some example welding-type power supplies, the operator interface is configured to receive a plurality of characteristics including the first characteristic.

In some example welding-type power supplies, the plurality of weld parameters comprise at least one of a welding-type process type, an output voltage, a wire feed speed, an output current, a pulse parameter, an AC parameter, or an inductance parameter. In some example welding-type power supplies, the one or more first inputs are configured to receive the travel speed as a length of the welding-type operation and a duration of the welding-type operation, in which the control circuitry is configured to determine the travel speed based on the length and the duration.

In some example welding-type power supplies, the one or more first inputs are configured to receive the travel speed as a length of the welding-type operation, in which the control circuitry is configured to measure a duration of a simulation of the welding-type operation and determine the travel speed based on the length and the measured duration. In some example welding-type power supplies, the control circuitry is configured to determine the plurality of weld parameters using a lookup table.

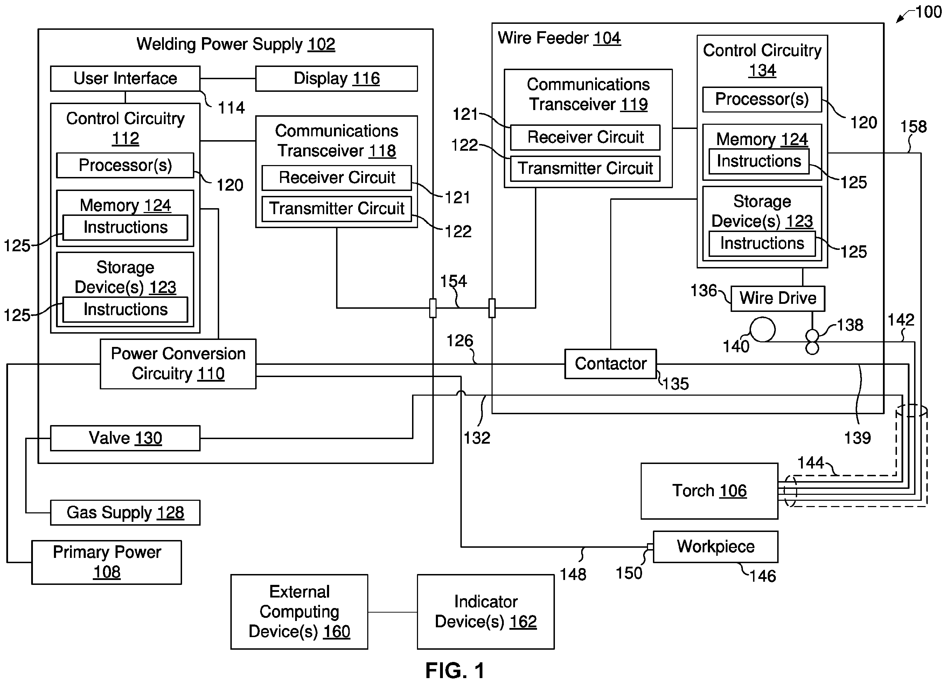

Turning now to the drawings, FIG. 1 is a block diagram of an example welding system 100 having a welding power supply 102, a wire feeder 104, and a welding torch 106. The welding system 100 powers, controls, and supplies consumables to a welding application. The example welding torch 106 is configured for gas metal arc welding (GMAW). In the illustrated example, the power supply 102 is configured to supply power to the wire feeder 104, and the wire feeder 104 may be configured to route the input power to the welding torch 106. In addition to supplying an input power, the wire feeder 104 supplies a filler metal to a welding torch 106 for various welding applications (e.g., GMAW welding, flux core arc welding (FCAW)).

The power supply 102 receives primary power 108 (e.g., from the AC power grid, an engine/generator set, a battery, or other energy generating or storage devices, or a combination thereof), conditions the primary power, and provides an output power to one or more welding devices in accordance with demands of the system 100. The primary power 108 may be supplied from an offsite location (e.g., the primary power may originate from the power grid). The power supply 102 includes a power conversion circuitry 110, which may include transformers, rectifiers, switches, and so forth, capable of converting the AC input power to AC and/or DC output power as dictated by the demands of the system 100 (e.g., particular welding processes and regimes). The power conversion circuitry 110 converts input power (e.g., the primary power 108) to welding-type power based on a weld voltage setpoint and outputs the welding-type power via a weld circuit.

In some examples, the power conversion circuitry 110 is configured to convert the primary power 108 to both welding-type power and auxiliary power outputs. However, in other examples, the power conversion circuitry 110 is adapted to convert primary power only to a weld power output, and a separate auxiliary converter is provided to convert primary power to auxiliary power. In some other examples, the power supply 102 receives a converted auxiliary power output directly from a wall outlet. Any suitable power conversion system or mechanism may be employed by the power supply 102 to generate and supply both weld and auxiliary power.

The power supply 102 includes control circuitry 112 to control the operation of the power supply 102. The power supply 102 also includes a user interface 114. The control circuitry 112 receives input from the user interface 114, through which a user may choose a process and/or input desired parameters (e.g., voltages, currents, particular pulsed or non-pulsed welding regimes, and so forth). The user interface 114 may receive inputs using any input device, such as via a keypad, keyboard, buttons, touch screen, voice activation system, wireless device, etc. Furthermore, the control circuitry 112 controls operating parameters based on input by the user as well as based on other current operating parameters. Specifically, the user interface 114 may include a display 116 for presenting, showing, or indicating, information to an operator. The control circuitry 112 may also include interface circuitry for communicating data to other devices in the system 100, such as the wire feeder 104. For example, in some situations, the power supply 102 wirelessly communicates with the wire feeder 104 and/or other welding devices within the welding system 100. Further, in some situations, the power supply 102 communicates with the wire feeder 104 and/or other welding devices using a wired connection, such as by using a network interface controller (NIC) to communicate data via a network (e.g., ETHERNET, 10BASE2, 10BASE-T, 100BASE-TX, etc.).

The control circuitry 112 includes at least one processor 120 that controls the operations of the power supply 102. The control circuitry 112 receives and processes multiple inputs associated with the performance and demands of the system 100. The processor 120 may include one or more microprocessors, such as one or more "general-purpose" microprocessors, one or more special-purpose microprocessors and/or ASICS, and/or any other type of processing device and/or logic circuit. For example, the processor 120 may include one or more digital signal processors (DSPs).

The example control circuitry 112 includes one or more storage device(s) 123 and one or more memory device(s) 124. The storage device(s) 123 (e.g., nonvolatile storage) may include ROM, flash memory, a hard drive, and/or any other suitable optical, magnetic, and/or solid-state storage medium, and/or a combination thereof. The storage device 123 stores data (e.g., data corresponding to a welding application), instructions (e.g., software or firmware to perform welding processes), and/or any other appropriate data. Examples of stored data for a welding application include an attitude (e.g., orientation) of a welding torch, a distance between the contact tip and a workpiece, a voltage, a current, welding device settings, and so forth.

The memory device 124 may include a volatile memory, such as random access memory (RAM), and/or a nonvolatile memory, such as read-only memory (ROM). The memory device 124 and/or the storage device(s) 123 may store a variety of information and may be used for various purposes. For example, the memory device 124 and/or the storage device(s) 123 may store processor executable instructions 125 (e.g., firmware or software) for the processor 120 to execute. In addition, one or more control regimes for various welding processes, along with associated settings and parameters, may be stored in the storage device 123 and/or memory device 124, along with code configured to provide a specific output (e.g., initiate wire feed, enable gas flow, capture welding current data, detect short circuit parameters, determine amount of spatter) during operation.

In some examples, the welding power flows from the power conversion circuitry 110 through a weld cable 126 to the wire feeder 104 and the welding torch 106. The example weld cable 126 is attachable and detachable from weld studs at each of the power supply 102 and the wire feeder 104 (e.g., to enable ease of replacement of the weld cable 126 in case of wear or damage).

The example communications transceiver 118 includes a receiver circuit 121 and a transmitter circuit 122. Generally, the receiver circuit 121 receives data transmitted by the wire feeder 104 and the transmitter circuit 122 transmits data to the wire feeder 104. The example wire feeder 104 also includes a communications transceiver 119, which may be similar or identical in construction and/or function as the communications transceiver 118. The communications transceivers 118, 119 may be configured for any other type of wireless and/or wired communications.

In some examples, a gas supply 128 provides shielding gases, such as argon, helium, carbon dioxide, and so forth, depending upon the welding application. The shielding gas flows to a valve 130, which controls the flow of gas, and if desired, may be selected to allow for modulating or regulating the amount of gas supplied to a welding application. The valve 130 may be opened, closed, or otherwise operated by the control circuitry 112 to enable, inhibit, or control gas flow (e.g., shielding gas) through the valve 130. Shielding gas exits the valve 130 and flows through a gas conduit 132 (which in some implementations may be packaged with the welding power output) to the wire feeder 104 which provides the shielding gas to the welding application. In some examples, the welding system 100 does not include the gas supply 128, the valve 130, and/or the gas conduit 132. In some other examples, the valve 130 is located in the wire feeder 104, and, the gas supply 128 is connected to the wire feeder 104.

In some examples, the wire feeder 104 uses the welding power to power the various components in the wire feeder 104, such as to power wire feeder control circuitry 134. As noted above, the weld cable 126 may be configured to provide or supply the welding power. The wire feeder control circuitry 134 controls the operations of the wire feeder 104. In some examples, the wire feeder 104 uses the wire feeder control circuitry 134 to detect whether the wire feeder 104 is in communication with the power supply 102 and to detect a current welding process of the power supply 102 if the wire feeder 104 is in communication with the power supply 102.

A contactor 135 (e.g., high amperage relay) is controlled by the wire feeder control circuitry 134 and configured to enable or inhibit welding power to continue to flow to a weld conductor 139 from the weld cable 126 for the welding application. In some examples, the contactor 135 is an electromechanical device. However, the contactor 135 may be any other suitable device, such as a solid state device, and/or may be omitted entirely and the weld cable 126 is directly connected to the output to the welding torch 106. The wire feeder 104 includes a wire drive 136 that receives control signals from the wire feeder control circuitry 134 to drive rollers 138 that rotate to pull wire off a spool 140 of wire. The wire drive 136 feeds electrode wire to the welding torch 106. The wire is provided to the welding application through a wire liner 142. Likewise, the wire feeder 104 may provide the shielding gas from the gas conduit 132. The example gas conduit 132, the example wire liner 142, and the example conductor 139 are combined in a torch cable 144. The electrode wire, the shield gas, and the power from the weld cable are bundled together in a single torch cable 144 and/or individually provided to the welding torch 106.

The welding torch 106 delivers the wire, welding power, and/or shielding gas for a welding application. The welding torch 106 is used to establish a welding arc between the welding torch 106 and a workpiece 146. A work cable 148 couples the workpiece 146 to the power supply 102 (e.g., to the power conversion circuitry 110) to provide a return path for the weld current (e.g., as part of the weld circuit). The example work cable 148 is attachable and/or detachable from the power supply 102 for ease of replacement of the work cable 148. The work cable 148 may be terminated with a clamp 150 (or another power connecting device), which couples the power supply 102 to the workpiece 146.

A communication cable 154 connected between the power supply 102 and the wire feeder 104, which enables bidirectional communication between the transceivers 118, 119. The communications transceivers 118 and 119 may communicate via the communication cable 154, via the weld circuit, via wireless communications, and/or any other communication medium. Examples of such communications include weld cable voltage measured at a device that is remote from the power supply 102 (e.g., the wire feeder 104).

The example system 100 may further include one or more external computing devices 160 and/or one or more indicator device(s) 162. The example external computing devices 160 may be a welding pendant, smartphone, tablet computer, desktop or laptop computer, PDA, media device, game console, and/or any other type of computing device separate from the welding-type power supply 102 and wire feeder 104. As discussed in more detail below, the external computing device(s) 160 and/or the interface 114 are configured to determine values of welding parameters based on a specified or measured travel speed. In particular, the example external computing device(s) 160 and/or the interface 114 determines welding parameter values based on characteristics of the welding-type operation and based on the specified or measured travel speed, and controls the welding-type power supply 102 based on the determined parameter values.

In some examples, the external computing device(s) 160 and/or the power supply 102 communicates with the indicator device(s) 162 to output indicators to an operator. Example indicator devices 162 may include: speakers, headsets, bone conduction devices, and/or other audio output systems; display screens, lights, LEDs, and/or other visual devices; force feedback devices, vibration feedback devices, motive feedback devices, and/or other types of haptic feedback devices; via manipulation of a welding-type arc without affecting the quality of the operation (e.g., outputting sound and/or visual indications by modulating an arc), and/or any other types of feedback devices. The indicator device(s) 162 may be integrated into other equipment, such as portable electronic devices (e.g., smartphones), welding-type power supplies, welding torches or tools, welding tables, wire feeders, welding helmets, wristwatches, apparel, and/or any other type of wearable or other devices that are observable by the operator.

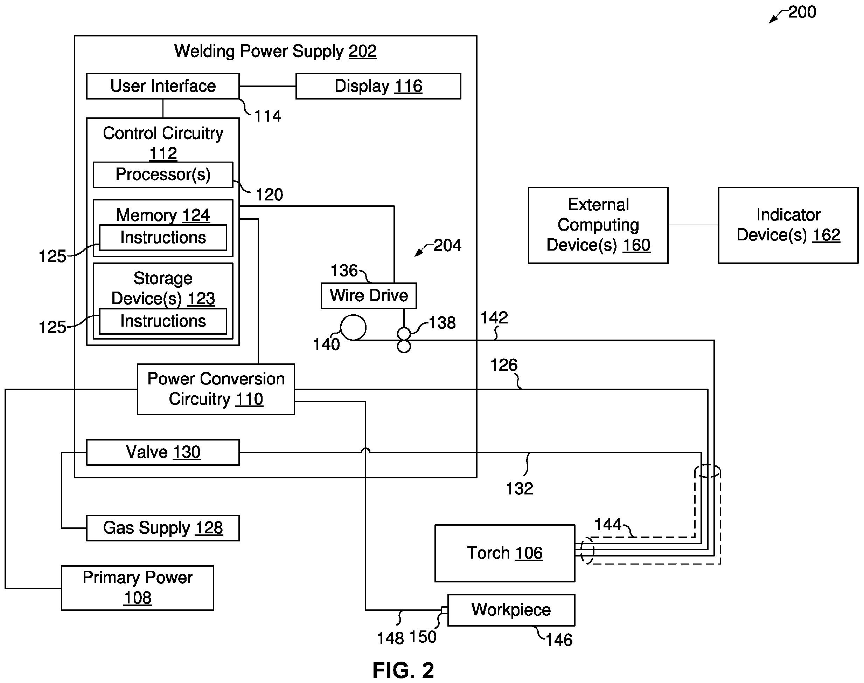

FIG. 2 is a block diagram of another example welding-type system 200 configured to provide power control with a welding power supply 202 having an integrated wire feeder 204. The example welding power supply 202 includes the power conversion circuitry 110, control circuitry 112, the user interface 114, the display 116, the processor(s) 120, the storage devices(s) 123, the memory 124, the instructions 125, and the valve 130 of the example power supply 102 of FIG. 1. The example welding-type system 200 further includes one or more external computing devices 160 and/or one or more indicator device(s) 162.

In contrast with the example system 100, in the example of FIG. 2 the power supply 202 includes the integrated wire feeder 204 instead being connected to a remote wire feeder. The power supply 202 of FIG. 2 outputs welding-type power and electrode wire to the torch 106.

The integrated wire feeder 204 includes the wire drive 136, the drive rollers 138, and the wire spool 140, and feeds the wire through a torch cable 144 to the torch 106.

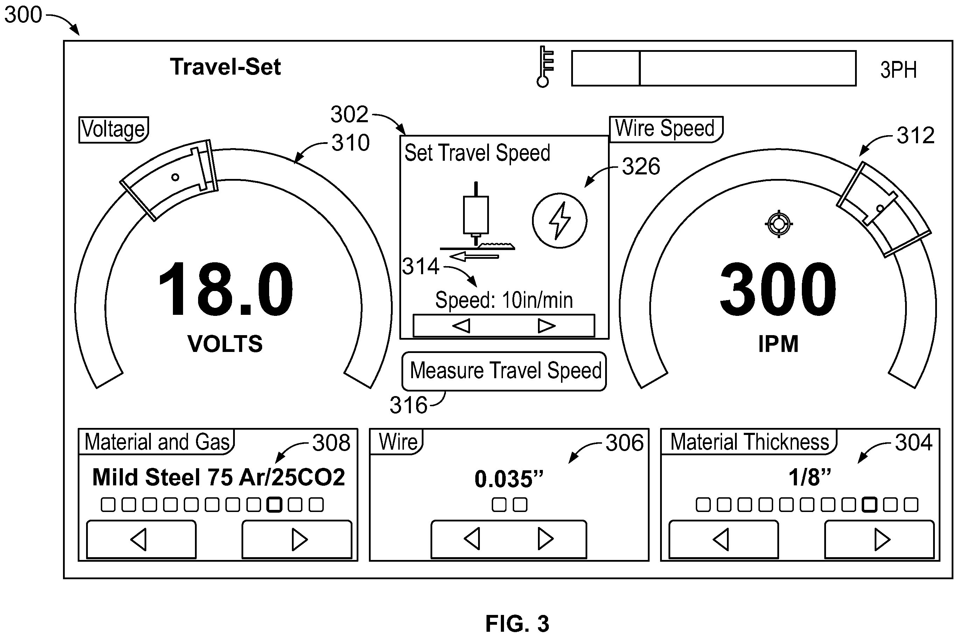

FIG. 3 illustrates an example interface 300 that may implement the interfaces 114 and/or devices 160 of FIGS. 1 and/or 2 to determine weld parameters based on a set travel speed. The interface 300 may be implemented on a graphical user interface (GUI) of the welding-type power supplies 102, 202, on an interface of the wire feeder 104, and/or on the external computing device 160, such as a smartphone display. The example interface 300 of FIG. 3 is a welding power supply interface which is displayed by the interface 114 and controlled by the control circuitry 112 of the welding power supplies 102, 202 of FIGS. 1 and/or 2, and allows selection of welding parameters such as voltage and wire feed speed. However, the interface 300 may implement any other type of welding-type equipment interface, such as power supplies for GMAW, FCAW, SMAW, GTAW, plasma cutting, and/or any other type of welding-type equipment.

To configure weld parameters based on travel speed, the example interface 300 includes a travel speed interface 302 and weld characteristic inputs 304, 306, 308. A material thickness input 304 allows input of the thickness of the workpiece 146. A wire size input 306 allows input of the size (e.g., diameter) of a welding wire to be used in the welding-type operation. A material and gas input 308 allows input of the workpiece material and welding gas composition. In some examples, the type welding equipment may limit the selectable values of the inputs 304-308 based on the capabilities of the selected equipment, and/or may reduce or increase the number of inputs. The values for the inputs 304-308 may be in actual units or normalized to a range. In some examples, recommended or default values of some inputs (e.g., voltage and wire feed speed inputs 310, 312) may be determined or provided based on other inputs (e.g., the material thickness input 304 and the wire size input 306).

The example inputs 304-312 may be received via an input device of the interface 300, such as a touchscreen, button, knob, and/or any other software and/or hardware input device. Additionally or alternatively, any or all of the inputs 304-312 may be received via communication with another (e.g., external) device. For example, for an interface implemented on the external computing device 160, the inputs 304-312 may be received via the external computing device 160 and/or via communications with a helmet, a power supply, a wire feeder, a pendant, and/or any other welding-type equipment or device. The external computing device 160 implementing the interface 300 may also receive any of the inputs 304-312 via obtaining and analyzing an optical image via an optical sensor (e.g., a camera of a smartphone). For example, a camera may be used to scan a code or marker to identify aspects of the workpiece, wire, welding parameters, and/or any other input characteristics or parameters.

The travel speed interface 302 may be displayed or hidden, such as by selection of a travel speed set button. While displayed, the travel speed interface 302 displays a travel speed input 314 and/or a travel speed measurement input 316. The operator may manually select the target travel speed via the travel speed input 314 using a directional input (e.g., increasing and decreasing inputs) and/or by direct entry using a numeric input.

In response to entry of the travel speed via the travel speed input 314, and based on the characteristic inputs 304-308, the control circuitry 112 determines values of one or more of the weld parameters, such as the voltage and wire feed speed for a wire-fed process (e.g., GMAW, FCAW). Other example parameters may include pulse parameters (e.g., pulse frequency, peak current and/or voltage, background current and/or voltage, etc.), AC parameters (e.g., frequency, balance, etc.), current, inductance, and/or any other desired parameters. For example, the control circuitry 112 may use a lookup table based on the travel speed input 314 and the characteristic inputs 304-308 to determine the corresponding values of the parameters. The control circuitry 112 may interpolate between taught points in the lookup table to obtain the parameter values. In other examples, the control circuitry 112 uses an algorithm or other process to determine the parameters based on the travel speed input 314 and the characteristic inputs 304-308. For welding operations, the lookup table or other technique may further determine the values of the weld parameters based on a target weld size, which may be determined by the characteristics of the weld (e.g., material thickness). As used herein, the term "weld size" refers to a predetermined the width, depth, or other dimension of a finished weld bead (e.g., a fillet weld size, a leg size, a groove weld size, etc.), which may include or omit portions of the base metal which have melted and fused with filler metal.

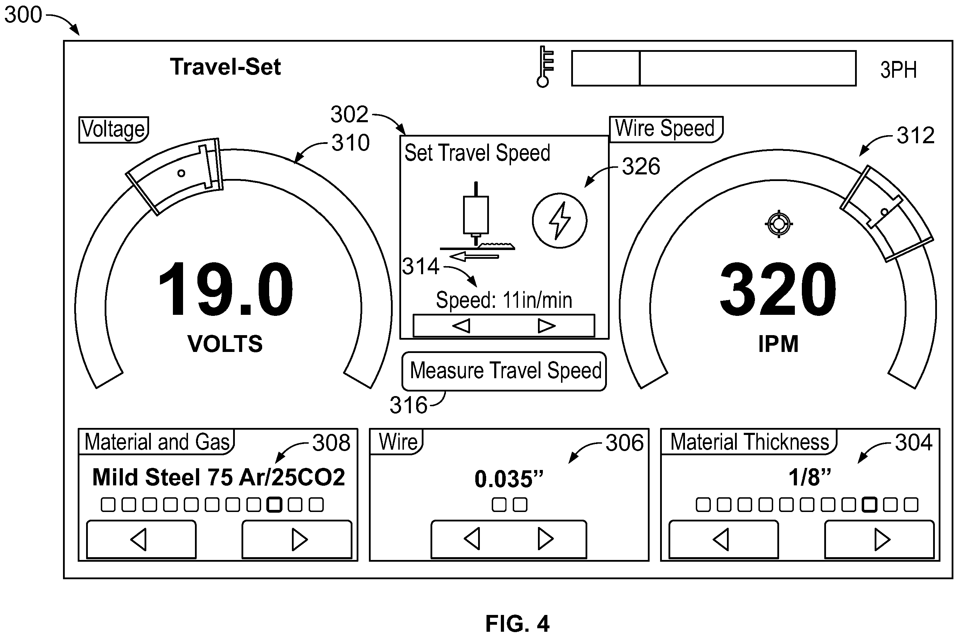

FIG. 4 illustrates the example interface 300 of FIG. 3 having updated values for the weld parameters 310, 312 based on a change in the travel speed input 314. For example, in response to an increase in the travel speed input 314 for the same characteristic inputs 304-308, the control circuitry 112 may determine (e.g., via lookup table or other method) that a corresponding increase in the voltage and wire feed speed are needed to provide adequate penetration to perform the specified weld.

In some examples, after setting the values of the weld parameters based on the travel speed input 314, the operator may be permitted to modify the determined values of the parameters. For example, the interface 300 may include inputs to modify the voltage and/or wire feed speed determined based on the travel speed input 314 and the inputs 304-308. In some examples, in response to an operator change to a value of a parameter, the control circuitry 112 determines change(s) to other parameter(s) that may be appropriate to maintain a preferred heat input, weld size, or other condition. The control circuitry 112 may output a notification of the change(s) to other parameters to notify the operator, such as via the interface 114 and/or the indicator device(s) 162. The interface 300 may allow the operator to prevent or reverse such changes, such as by including locking inputs to lock one or more of the determined parameter values.

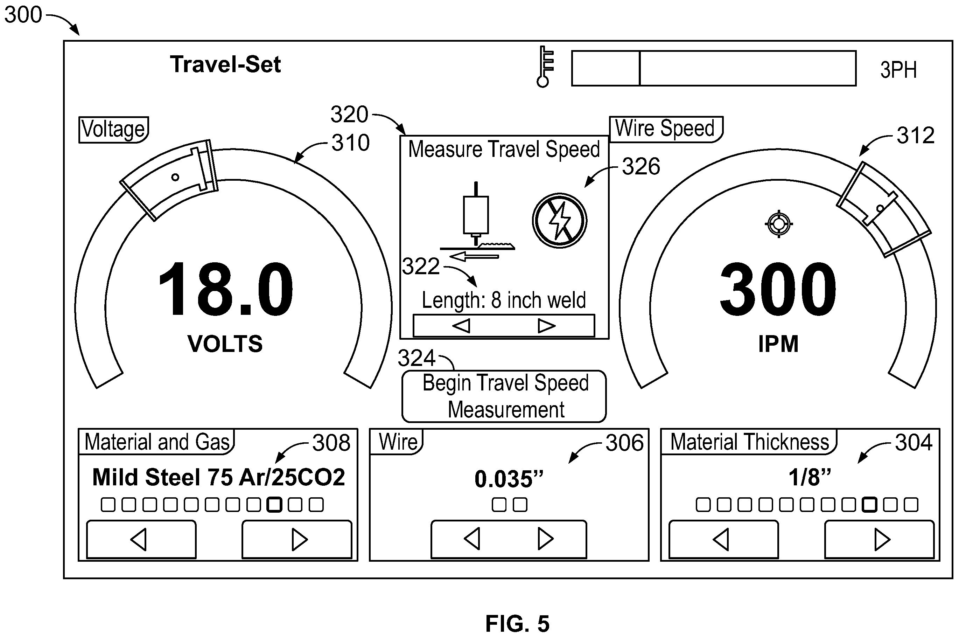

When the operator selects the travel speed measurement input 316, the interface 300 displays a speed measurement interface 320, including an operation length input 322 and a measurement starting button 324. FIG. 5 illustrates the example interface of FIG. 3 including the speed measurement interface 320.

The measurement starting button 324 starts a timer to measure a time for the operator to simulate the welding-type operation, having the length specified in the operation length input 322 and at the desired travel speed, without outputting welding-type power. At the conclusion of the simulated welding-type operation, the operator selects another button or input to end the timer.

In some examples, the starting of measurement may be triggered by receiving a trigger signal (e.g., from the torch 106 of FIGS. 1 and/or 2, from a foot pedal, by detecting a force input via an input device, via a voice command, and/or any other input device) to allow the operator to more precisely measure the time to perform the operation.

Using the measured time and the length specified by the operation length input 322, the control circuitry 112 calculates a desired travel speed and sets the travel speed input 314 to the determined travel speed. The operator may further adjust the determined speed using the travel length input 314. In some examples, the control circuitry 112 may determine, based on the characteristic inputs 304-308 whether the determined travel speed is within an acceptable range and/or within a preferred range, and alert the operator if the determined travel speed is not within one or both ranges. For example, if the parameters determined based on the travel speed are within acceptable ranges and/or are not supported by the welding-type power supply 102, 202 (or other welding-type equipment), the control circuitry 112 may output a notification to alert the operator that a different travel speed must be selected.

In some other examples, instead of receiving the simulated operation length via the operation length input 322, the example interface 300 may instruct the operator to use a predetermined length (e.g., 6 inches, 10 inches, etc.) to measure the travel speed, and/or the operation length input 322 may select between two or more predetermined lengths.

The speed measurement interface 320 further includes a power supply enable indicator 326, which indicates whether a welding-type tool used to perform the operation specified by the inputs 304-318 uses output power from the power supply 102, 202. The power supply enable indicator 326 may be output via the interface 300 via the user interface 114, the external computing device 160, and/or the indicator device(s) 162. For example, the control circuitry 112 of the power supply 102 (or the processor 702 of the external computing device 160) may further control the power conversion circuitry 110 to enable output of welding-type power by the welding-type power supply 102 for performing welding-type operations, and control the power supply enable indicator 326 to indicate that output power is enabled. Conversely, the control circuitry 112 may control the power conversion circuitry 110 to disable output power for simulated operations (e.g., if selected by the operator, and/or to perform simulated operations for travel speed measurement), and control the power supply enable indicator 326 to indicate that output power is disabled.

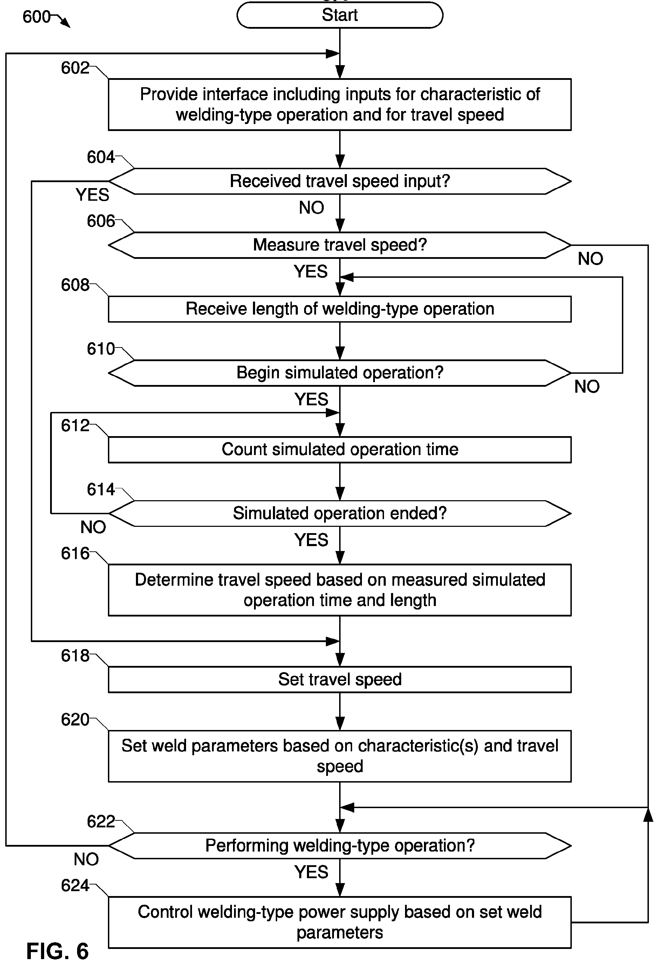

FIG. 6 is a flowchart representative of example machine readable instructions 600 which may be executed by the example welding-type power supplies 102, 202 and/or external computing devices 160 of FIGS. 1 and/or 2 to provide travel speed guidance. The example instructions 600 are discussed below with reference to the interface 300 and the welding-type power supply 102 of FIG. 1, but may be performed by other devices.

At block 602, the control circuitry 112 of the power supply 102 provides an interface (e.g., the interface 300 of FIG. 3) including inputs 304-308 for characteristics of a welding-type operation and an input 314 for a travel speed.

At block 604, the control circuitry 112 determines whether a travel speed input has been received. For example, the control circuitry 112 may determine whether a modification has been made, via the travel speed input 314, to a prior travel speed value, a default travel speed value, or a determined travel speed value. If a travel speed input has not been received (block 604), at block 606 the control circuitry 112 determines whether the travel speed is to be measured. For example, the control circuitry 112 may determine whether the speed measurement interface 320 is selected or active.

If the travel speed is to be measured, at block 608 the control circuitry 112 receives a length of the welding-type operation (e.g., via the operation length input 322, or a predetermined length). At block 610, the control circuitry 112 determines whether to begin the simulated operation. For example, the control circuitry 112 may determine whether the measurement starting button 324 has been selected and/or whether another signal has been received to start measuring a duration of a simulated operation. If a signal to begin the simulation operation has not been received (block 610), control returns to block 608 to receive further changes to the length of the welding-type operation (if entered by the operator).

When a signal to begin the simulation operation has not been received (block 610), at block 612 the control circuitry 112 counts a simulated operation time (e.g., via a counter or timer). At block 614, the control circuitry 112 determines whether the simulated operation has ended (e.g., via selection of an end button on the interface 300, via receiving a trigger release signal or lack of trigger signal, via a foot pedal signal, etc.) and, while the simulation operation has not ended, returns to block 612 to continue counting the simulated operation time.

When the simulated operation is ended (block 614), at block 616 the control circuitry 112 determines a travel speed based on the measured simulated operation time (e.g., the timer or counter) and the operation length input 322.

After receiving the travel speed input (block 604), or after determining the travel speed (block 616), at block 618 the control circuitry 112 sets the travel speed (e.g., sets the value of the travel speed input 314). At block 620, the control circuitry 112 sets values of one or more weld parameter(s) based on the characteristic input(s) 304-308 and based on the set travel speed.

After setting the weld parameters (block 620), or if the travel speed is not set or measured (block 606), at block 622 the control circuitry 112 determines whether a welding-type operation is to be performed. For example, the control circuitry 112 may determine whether a trigger signal, foot pedal signal, or other input is received (e.g., for GMAW, FCAW, GTAW, plasma cutting, and/or other processes), and/or whether current output from the power conversion circuitry 110 is detected (e.g., for GTAW, SMAW, and/or other processes). If the welding-type operation is not being performed (block 622), control returns to block 602.

If the welding-type operation is being performed (block 622), at block 624 the control circuitry 112 controls the welding-type power supply 102 (e.g., the power conversion circuitry 110) based on the set weld parameters, and returns to block 622.

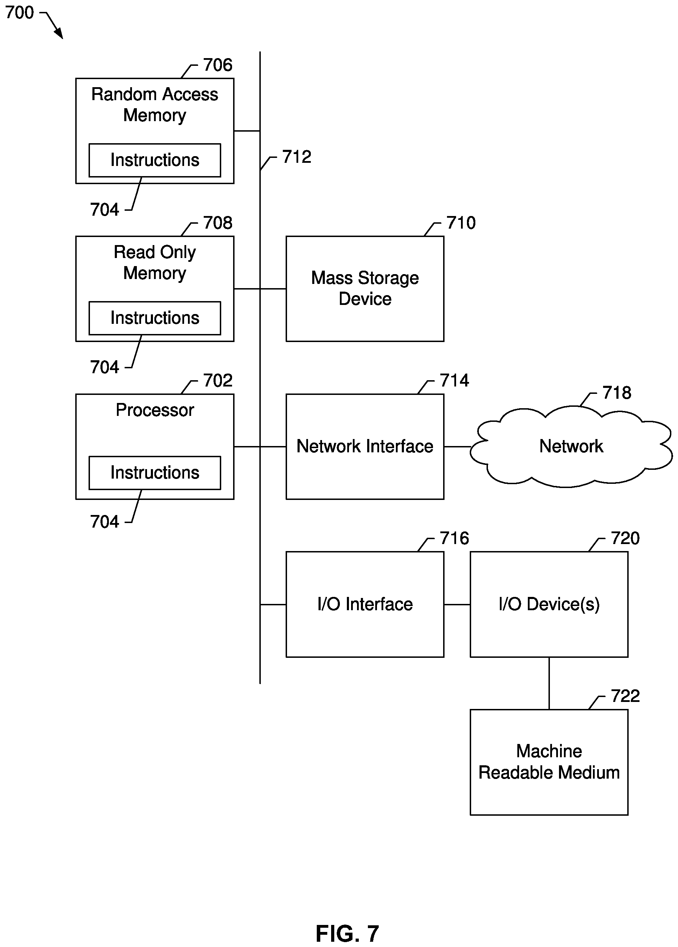

FIG. 7 is a block diagram of an example computing system 700 that may be used to implement the external computing device(s) 160 and/or the interface 300 of FIGS. 1-5. The example computing system 700 of FIG. 7 may be a welding device, a general-purpose computer, a laptop computer, a tablet computer, a mobile device, a server, and/or any other type of computing device.

The example computing system 700 of FIG. 7 includes a processor 702 or other control circuitry. The example processor 702 may be any general purpose central processing unit (CPU) from any manufacturer. In some other examples, the processor 702 may include one or more specialized processing units, such as RISC processors with an ARM core, graphic processing units, digital signal processors, and/or system-on-chips (SoC). The processor 702 executes machine readable instructions 704 that may be stored locally at the processor (e.g., in an included cache or SoC), in a random access memory 706 (or other volatile memory), in a read only memory 708 (or other non-volatile memory such as FLASH memory), and/or in a mass storage device 710. The example mass storage device 710 may be a hard drive, a solid state storage drive, a hybrid drive, a RAID array, and/or any other mass data storage device. In some examples, the instructions 600 of FIG. 6 may be implemented using the machine readable instructions 704 stored in one or more of the random access memory 706, the read only memory 708, the mass storage device 710, and/or other storage device, and executed via the processor 702.

A bus 712 enables communications between the processor 702, the RAM 706, the ROM 708, the mass storage device 710, a network interface 714, and/or an input/output interface 716.

The example network interface 714 includes hardware, firmware, and/or software to connect the computing system 700 to a communications network 718 such as the Internet. For example, the network interface 714 may include IEEE 802.X-compliant wireless and/or wired communications hardware for transmitting and/or receiving communications.

The example I/O interface 716 of FIG. 7 includes hardware, firmware, and/or software to connect one or more input/output devices 720 to the processor 702 for providing input to the processor 702 and/or providing output from the processor 702. For example, the I/O interface 716 may include a graphics processing unit for interfacing with a display device, a universal serial bus port for interfacing with one or more USB-compliant devices, a FireWire, a field bus, and/or any other type of interface. Example I/O device(s) 720 may include a keyboard, a keypad, a mouse, a trackball, a pointing device, a microphone, an audio speaker, a display device, an optical media drive, a multi-touch touch screen, a gesture recognition interface, a magnetic media drive, and/or any other type of input and/or output device.

The example processor 702 may access a non-transitory machine readable medium 722 via the I/O interface 716 and/or the I/O device(s) 720. Examples of the machine readable medium 722 of FIG. 7 include optical discs (e.g., compact discs (CDs), digital versatile/video discs (DVDs), Blu-ray discs, etc.), magnetic media (e.g., floppy disks), portable storage media (e.g., portable flash drives, secure digital (SD) cards, etc.), and/or any other type of removable and/or installed machine readable media.

The example network interface 714 and/or the I/O interface 716 may communicate with the welding-type power supplies 102, 202 and/or with the indicator device(s) 162 of FIGS. 1 and/or 2 to communicate parameters and/or commands, and/or to output indicators based on indicator intervals and/or intermediate intervals.

The present methods and systems may be realized in hardware, software, and/or a combination of hardware and software. The present methods and/or systems may be realized in a centralized fashion in at least one computing system, or in a distributed fashion where different elements are spread across several interconnected computing systems. Any kind of computing system or other apparatus adapted for carrying out the methods described herein is suited. A typical combination of hardware and software may include a general-purpose computing system with a program or other code that, when being loaded and executed, controls the computing system such that it carries out the methods described herein. Another typical implementation may comprise an application specific integrated circuit or chip. Some implementations may comprise a non-transitory machine-readable (e.g., computer readable) medium (e.g., FLASH drive, optical disk, magnetic storage disk, or the like) having stored thereon one or more lines of code executable by a machine, thereby causing the machine to perform processes as described herein. As used herein, the term "non-transitory machine-readable medium" is defined to include all types of machine readable storage media and to exclude propagating signals.

As used herein, for example, a particular processor and memory may comprise a first "circuit" when executing a first one or more lines of code and may comprise a second "circuit" when executing a second one or more lines of code. As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by a user-configurable setting, factory trim, etc.).

While the present method and/or system has been described with reference to certain implementations, it will be understood by those skilled in the art that various changes may be made and equivalents may be substituted without departing from the scope of the present disclosure. In addition, many modifications may be made to adapt a particular situation or material to the teachings of the present disclosure without departing from its scope. For example, systems, blocks, and/or other components of disclosed examples may be combined, divided, rearranged, and/or otherwise modified. Therefore, the present method and/or system are not limited to the particular implementations disclosed. Instead, the present method and/or system will include all implementations falling within the scope of the appended claims, both literally and under the doctrine of equivalents.

Certain embodiments of the invention are described in the following clauses:
Clause 1. An operator interface for welding-type operations, the operator interface comprising:
   one or more first inputs configured to receive a travel speed;
   one or more second inputs configured to receive a first characteristic of a welding-type operation; and
   control circuitry configured to:
      determine values for a plurality of welding-type parameters based on the travel speed and the first characteristic; and
      configure a welding-type power supply using the determined values for the plurality of welding-type parameters.
Clause 2. The operator interface as defined in clause 1, wherein the first characteristic comprises at least one of a material thickness of a workpiece of the welding-type operation, a shielding gas type, a wire size, or a wire type.
Clause 3. The operator interface as defined in clause 2, wherein the operator interface is configured to receive a plurality of characteristics including the first characteristic.
Clause 4. The operator interface as defined in clause 1, wherein the plurality of welding-type parameters comprise at least one of a welding-type process type, an output voltage, a wire feed speed, an output current, a pulse parameter, an AC parameter, or an inductance parameter.
Clause 5. The operator interface as defined in clause 1, wherein the one or more first inputs are configured to receive the travel speed as a length of the welding-type operation and a duration of the welding-type operation, the control circuitry configured to determine the travel speed based on the length and the duration.
Clause 6. The operator interface as defined in clause 1, wherein the one or more first inputs are configured to receive the travel speed as a length of the welding-type operation, the control circuitry configured to measure a duration of a simulation of the welding-type operation and determine the travel speed based on the length and the measured duration.
Clause 7. The operator interface as defined in clause 1, wherein the one or more first inputs are configured to receive the travel speed as a measured duration of a simulated welding-type operation over a predetermined length, the control circuitry configured to determine the travel speed based on the predetermined length and the measured duration.
Clause 8. The operator interface as defined in clause 1, wherein the control circuitry is configured to determine the plurality of welding-type parameters using a lookup table.
Clause 9. The operator interface as defined in clause 8, wherein the lookup table specifies values for the plurality of welding-type parameters at a plurality of different travel speeds.
Clause 10. The operator interface as defined in clause 1, wherein the control circuitry is configured to, in response to determining that the travel speed is outside of a range based on at least the first characteristic, output at least one of an indication to change the travel speed or an indication that the travel speed is not permitted.
Clause 11. The operator interface as defined in clause 1, further comprising one or more third inputs configured to receive operator modifications to one or more of the determined values of the plurality of welding-type parameters.
Clause 12. The operator interface as defined in clause 11, wherein the control circuitry is configured to, in response to the operator modifications, change one or more values of other ones of the welding-type parameters.
Clause 13. The operator interface as defined in clause 1, wherein the control circuitry is configured to determine the values for a plurality of welding-type parameters based on a target weld size.
Clause 14. A welding-type power supply, comprising:
   power conversion circuitry configured to convert input power to welding-type power;
   an operator interface comprising:
      one or more first inputs configured to receive a travel speed; and
      one or more second inputs configured to receive a first characteristic of a welding-type operation; and
   control circuitry configured to:
      determine values for a plurality of weld parameters based on the travel speed and the first characteristic; and
      control the power conversion circuitry based on the determined values for the plurality of weld parameters.
Clause 15. The welding-type power supply as defined in clause 14, wherein the first characteristic comprises at least one of a material thickness of a workpiece of the welding-type operation, a shielding gas type, a wire size, or a wire type.
Clause 16. The welding-type power supply as defined in clause 15, wherein the operator interface is configured to receive a plurality of characteristics including the first characteristic.
Clause 17. The welding-type power supply as defined in clause 14, wherein the plurality of weld parameters comprise at least one of a welding-type process type, an output voltage, a wire feed speed, an output current, a pulse parameter, an AC parameter, or an inductance parameter.
Clause 18. The welding-type power supply as defined in clause 14, wherein the one or more first inputs are configured to receive the travel speed as a length of the welding-type operation and a duration of the welding-type operation, the control circuitry configured to determine the travel speed based on the length and the duration.
Clause 19. The welding-type power supply as defined in clause 14, wherein the one or more first inputs are configured to receive the travel speed as a length of the welding-type operation, the control circuitry configured to measure a duration of a simulation of the welding-type operation and determine the travel speed based on the length and the measured duration.
Clause 20. The welding-type power supply as defined in clause 14, wherein the control circuitry is configured to determine the plurality of weld parameters using a lookup table.

## Claims

1. An operator interface for welding-type operations, the operator interface comprising:
one or more first inputs configured to receive a travel speed;
one or more second inputs configured to receive a first characteristic of a welding-type operation; and
control circuitry configured to:
determine values for a plurality of welding-type parameters based on the travel speed and the first characteristic; and
configure a welding-type power supply using the determined values for the plurality of welding-type parameters.

2. The operator interface as defined in claim 1, wherein the first characteristic comprises at least one of a material thickness of a workpiece of the welding-type operation, a shielding gas type, a wire size, or a wire type, and optionally wherein the operator interface is configured to receive a plurality of characteristics including the first characteristic.

3. The operator interface as defined in claim 1, wherein the plurality of welding-type parameters comprise at least one of a welding-type process type, an output voltage, a wire feed speed, an output current, a pulse parameter, an AC parameter, or an inductance parameter.

4. The operator interface as defined in claim 1, wherein the one or more first inputs are configured to receive the travel speed as a length of the welding-type operation and a duration of the welding-type operation, the control circuitry configured to determine the travel speed based on the length and the duration.

5. The operator interface as defined in claim 1, wherein the one or more first inputs are configured to receive the travel speed as a length of the welding-type operation, the control circuitry configured to measure a duration of a simulation of the welding-type operation and determine the travel speed based on the length and the measured duration.

6. The operator interface as defined in claim 1, wherein the one or more first inputs are configured to receive the travel speed as a measured duration of a simulated welding-type operation over a predetermined length, the control circuitry configured to determine the travel speed based on the predetermined length and the measured duration.

7. The operator interface as defined in claim 1, wherein the control circuitry is configured to determine the plurality of welding-type parameters using a lookup table, and optionally wherein the lookup table specifies values for the plurality of welding-type parameters at a plurality of different travel speeds.

8. The operator interface as defined in claim 1, wherein the control circuitry is configured to, in response to determining that the travel speed is outside of a range based on at least the first characteristic, output at least one of an indication to change the travel speed or an indication that the travel speed is not permitted.

9. The operator interface as defined in claim 1, further comprising one or more third inputs configured to receive operator modifications to one or more of the determined values of the plurality of welding-type parameters, and optionally wherein the control circuitry is configured to, in response to the operator modifications, change one or more values of other ones of the welding-type parameters.

10. The operator interface as defined in claim 1, wherein the control circuitry is configured to determine the values for a plurality of welding-type parameters based on a target weld size.

11. A welding-type power supply, comprising:
power conversion circuitry configured to convert input power to welding-type power;
an operator interface comprising:
one or more first inputs configured to receive a travel speed; and
one or more second inputs configured to receive a first characteristic of a welding-type operation; and
control circuitry configured to:
determine values for a plurality of weld parameters based on the travel speed and the first characteristic; and
control the power conversion circuitry based on the determined values for the plurality of weld parameters.

12. The welding-type power supply as defined in claim 11, wherein the first characteristic comprises at least one of a material thickness of a workpiece of the welding-type operation, a shielding gas type, a wire size, or a wire type, and optionally wherein the operator interface is configured to receive a plurality of characteristics including the first characteristic.

13. The welding-type power supply as defined in claim 11, wherein the plurality of weld parameters comprise at least one of a welding-type process type, an output voltage, a wire feed speed, an output current, a pulse parameter, an AC parameter, or an inductance parameter.

14. The welding-type power supply as defined in claim 11, wherein the one or more first inputs are configured to receive the travel speed as a length of the welding-type operation and a duration of the welding-type operation, the control circuitry configured to determine the travel speed based on the length and the duration.

15. The welding-type power supply as defined in claim 11, wherein the one or more first inputs are configured to receive the travel speed as a length of the welding-type operation, the control circuitry configured to measure a duration of a simulation of the welding-type operation and determine the travel speed based on the length and the measured duration, or wherein the control circuitry is configured to determine the plurality of weld parameters using a lookup table.
